# EUROPEAN PATENT APPLICATION

(11) **EP 3 029 677 A1**
(43) Date of publication of application: **08.06.2016**
(21) Application number: 15197084.5
(22) Date of filing: 30.11.2015
(51) Int. Cl.: G11B 27/031, G11B 27/28, G06T 13/80

(54) **A METHOD AND APPARATUS FOR GENERATING AUTOMATIC ANIMATION**

(30) Priority: 04.12.2014 EP 14306950
(71) Applicant: Thomson Licensing, 92130 Issy-les-Moulineaux (FR)
(72) Inventor: AUTIER, Ingrid, 35576 Cesson-Sévigné (FR); CHEVET, Jean-Claude, 35576 Cesson-Sévigné (FR); OISEL, Lionel, 35576 Cesson-Sévigné (FR)
(74) Representative: Huchet, Anne

(57) **Abstract**

Methods and apparatuses for automatic animation are suggested. An example method can include: detecting one or more regions of interest (ROIs) in an image at least partially based on saliency values of the one or more ROIs; determining a sequence of presenting the one or more ROIs; and generating an animation based on the ROIs and the sequence, wherein an animation path, along which a display area is moved between adjacent ROIs in the sequence, is determined to maximize the sum of the saliency values of the one or more ROIs along the path.

## Description

### TECHNICAL FIELD

The present disclosure generally relates to the field of image processing, and more particularly, to methods and apparatuses for automatic animation.

### BACKGROUND

This section is intended to provide a background to the various embodiments of the technology described in this disclosure. The description in this section can include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Many tools, such as PowerPoint or PulpMotion, provide for creation of a slide show to present still pictures, or creation of an animation from still pictures, video, or other media files.

Further, tools like PulpMotion or MemoryMiner offer the possibility to select a point/area in a picture to define a location target, so that an animation is created to visualize the picture from its total size to a focus on the point/area or from the focus point/area to a global view. In some cases, it is also possible to define a set of points and an associated ranking in order to define a trajectory that will be used to move a virtual camera and generate a synthetic video sequence. These tools always require human actions to select points and order in which they are used in the animation.

### SUMMARY

The present disclosure aims to provide, among others, methods and apparatuses for automatic animation, by which it is possible to create an animation in an automatic manner.

According to a first aspect of the present disclosure, there is provided a method. The method can comprise: detecting one or more regions of interest (ROIs) in an image at least partially based on saliency values of the one or more ROIs; determining a sequence of presenting the one or more ROIs; and generating an animation based on the ROIs and the sequence, wherein an animation path, along which a display area is moved between adjacent ROIs in the sequence, is determined to maximize the sum of the saliency values of the one or more ROIs along the path.

In an embodiment, the ROIs and the display area each can be rectangular regions.

In an embodiment, the rectangular regions can each have an aspect ratio corresponding to that of a screen for displaying the image.

In an embodiment, the display area can have its size varied from that of a first ROI to that of a second ROI when it is moved from the first ROI to the second ROI.

In an embodiment, the size of the display area can be varied according to a linear function or any other continuous function.

In an embodiment, the one or more ROIs can be selected to have relatively high saliency values.

In an embodiment, it can further comprise: computing a saliency map based on the image, wherein the ROIs are detected based on the saliency map.

In an embodiment, the sequence can be determined at least partially based on sizes of the respective ROIs.

In an embodiment, the sequence can be determined at least partially based on the average saliency value of the respective ROIs.

In an embodiment, the sequence of ROIs can start and/or end by the complete image.

In an embodiment, the sequence can comprise: starting from a largest ROI to a smallest ROI; or starting from a smallest ROI to a largest ROI.

In an embodiment, the operation of determining the sequence can further comprise: alternating the sequence of the ROIs every image.

In an embodiment, the sequence can be determined at least partially based on locations of the respective ROIs.

In an embodiment, the sequence can comprise: going from a current ROI to a next ROI closest to the current ROI.

In an embodiment, the operation of determining the sequence can further comprise: in a case of ending with a relatively small ROI for a first image, then starting with a ROI close to the ending ROI for a second image next to the first image in the sequence.

In an embodiment, the operation of determining the sequence can further comprise arranging the full image prior to or posterior to the one or more ROIs.

According to a second aspect of the present disclosure, there is provided an apparatus. The apparatus can comprise: a memory configured to store the image and data required for operation of the apparatus; and a processor, configured to: detect one or more regions of interest (ROIs) in the image at least partially based on saliency values of the one or more ROIs; determine a sequence of presenting the one or more ROIs; and generate an animation based on the ROIs and the sequence, wherein an animation path, along which a display area is moved between adjacent ROIs in the sequence, is determined to maximize the sum of the saliency values of the one or more ROIs along the path. As a result, it is possible to present or display the ROI(s) in the sequence (and also the full image) for animation.

In an embodiment, the processor can be further configured to determine an animation path along which a display area is moved between adjacent ROIs in the sequence at least partially based on saliency.

In an embodiment, the apparatus can further comprise an input device configured to receive an input to define a rule of determining the sequence and/or a rule of determining the animation path.

In an embodiment, the apparatus can further comprise an interface configured to receive the image from an external device.

According to some embodiments, the ROI(s) can be selected to have relatively high saliency values. For example, region(s) or area(s) with the highest saliency value can be determined as the ROI(s).

According to some embodiments, a saliency map can be computed based on the image, and the ROI(s) can be detected based on the saliency map. Face detection can be further performed to find ROI(s) with human face(s).

Further, an animation path, along which a display area is moved between adjacent ROIs in the sequence, can be determined at least partially based on saliency. In an example, the animation path can be determined to maximize the saliency along the path. Thus, between presenting a first ROI and a second ROI next to the first ROI, some different region(s) or area(s) of the image than the ROI(s) along a stretch of the animation path bridging the first ROI and the second ROI, that is, region(s) or area(s) enclosed by the display area when it is moving on the image along the path from the first ROI to the second ROI, can be also presented. The path can be selected so that the region(s) or area(s) can have highest saliency (other than the ROI(s)).

The ROI(s) and the display area each can be rectangular regions, for example, those with an aspect ratio corresponding to that of a screen for displaying the image/ROI(s). The display area can have its size varied from that of a first ROI to that of a second ROI when it is moved from the first ROI to the second ROI. In an example, the size of the display area can be varied according to a linear function or any other continuous function.

According to some embodiments, the sequence can be determined at least partially based on sizes of the respective ROIs. For example, the animation path can comprise starting from a largest ROI to a smallest ROI, or vice versa.

According to some embodiments, the sequence can be determined at least partially based on locations of the respective ROIs (in addition to or in lieu of the size criterion). For example, the sequence can comprise going from a current ROI to a next ROI closest to the current ROI.

Further, the animation path can further comprise arranging the (full) image itself prior to or posterior to the one or more ROIs. Alternatively, the full image can be considered as also an ROI, and thus the sequence can be determined with respect to both the ROI(s) and the full image (or, the largest ROI).

There can be a plurality of images to be presented in sequence for a slide show. At least some of the images can be processed as above. Thus, in presenting each of the images, the animation for this image can be presented. Further, the sequence can be determined differently for adjacent images in the slide show, so that a first image can have a first sequence which is different from a second sequence of a second image next to the first image. For example, the presenting sequence of the ROIs can be alternated every image. In a case of ending with a relatively small ROI for a first image, then a second image next to the first image can start with a ROI close to the ending ROI of the first image.

The animation can be intended for display on a fixed size of screen. In such as case, cropping and/or zooming in/out can be performed on the ROI(s) and/or the full image along the animation path. A factor for the cropping or zooming can be interpolated between two positions in the animation path.

According to a third aspect of the present disclosure, there is provided a computer program comprising product program code instructions executable by a processor for implementing the steps of a method according to the first aspect of the disclosure.

According to a fourth aspect of the present disclosure, there is provided a computer program product which is stored on a non-transitory computer readable medium and comprises program code instructions executable by a processor for implementing the steps of a method according to the first aspect of the disclosure.

According to embodiments of the present disclosure, the operations of detecting, determining, and generating can be automatically performed by a computing device, even without manual interactions involved.

### BRIEF DESCRIPTION OF THE DRAWINGS

The above and other objects, features, and advantages of the present disclosure will become more apparent from following descriptions on embodiments thereof with reference to attached drawings, in which:
Fig. 1 is a block diagram schematically showing an apparatus according to an embodiment of the present disclosure;
Fig. 2 is a flow chart schematically showing a method according to an embodiment of the present disclosure;
Fig. 3 schematically shows an image and results of the image processed according to an embodiment of the present disclosure;
Fig. 4 schematically shows an image, ROIs detected therein, and an animation path between the ROIs according to an embodiment of the present disclosure;
Fig. 5 schematically shows sequence switching between adjacent images; and
Fig. 6 is a flow chart schematically showing a flow of a possible application.

### DETAILED DESCRIPTION OF THE EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

The terminology used herein is for the purpose of describing particular embodiments only, and is not intended to limit the present disclosure. As used herein, the singular forms "a," "an" and "the" are intended to include plural forms as well, unless the context explicitly indicated otherwise. Further, the term "comprises" or "comprising," when used herein, specifies the presence of stated features, steps, operations, and/or components, but do not preclude the presence or addition of one or more other features, steps, operations, or components.

All terms (including technical and scientific terms) used herein have the same meaning as commonly understood by one of ordinary skill in the art, unless otherwise defined. It is to be noted that terms used herein should be interpreted as having a meaning that is consistent with their meaning in the context of this specification and the relevant art and will not be interpreted in an idealized or overly formal sense.

The technology of the present disclosure is described below with reference to block diagrams and/or flow charts according to embodiments of the present disclosure. It should be understood that several blocks of the block diagrams and/or flow charts, or combinations thereof, can be implemented by computer program instructions. These computer program instructions can be provided to a processor of a general purpose computer, a dedicated computer, and/or other programmable data processing apparatus, such that the instructions, when executed by the processor, create means for implementing functionalities/operations specified in the block diagrams and/or the flow charts.

Accordingly, the technology described herein can be embodied in hardware and/or software (including firmware, micro-code, etc.). Furthermore, the technology can take the form of a computer program product on a computer-readable medium having instructions stored thereon, for use by or in connection with an instruction execution system. In the context of the present disclosure, a computer-readable medium can be any medium that can contain, store, communicate, propagate, or transport the instructions. For example, the computer-readable medium can comprise, but not limited to, an electronic, magnetic, optical, electromagnetic, infrared, or semiconductor system, apparatus, device, or propagation medium. Specific example of the computer-readable medium include: a magnetic storage, such as magnetic tape or hard disk drive (HDD), an optical storage, such as compact disc-read only memory (CD-ROM); a memory, such as random access memory (RAM) or flash memory; and/or wired or wireless communication links.

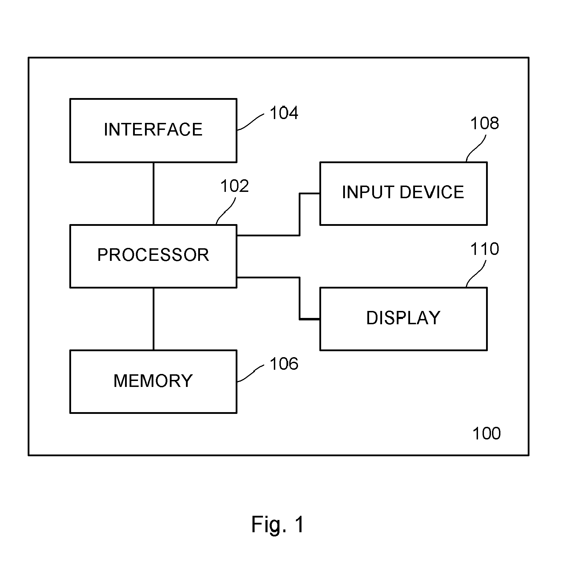

Fig. 1 is a block diagram schematically showing an apparatus according to an embodiment of the present disclosure.

As shown in Fig. 1, the apparatus 100 can comprise a processor 102, an interface 104, and a memory 106.

The processor 102 can comprise any suitable device capable of performing desired processing on data, especially, image data. For example, the processor 102 can be a general central processing unit (CPU), an application specific integrated circuit (ASIC), a digital signal processor (DSP), a field programmable gate array (FPGA), or a dedicated image processor. More specifically, the processor 102 is configured to perform methodologies to be described below.

The interface 104 can serve as an interface between the apparatus 100 and an external device, such as a card reader. For example, a memory card, which is used by a digital camera (DC) and/or a digital video recorder (DVR) for storing pictures and/or video, can be inserted into the card reader. The card reader can read the stored pictures and/or video (or "images") from the memory card inserted therein, and then deliver the read images to the processor 102 via the interface 104. Here, the term "image" can refer to still pictures or moving images (for example, frames thereof).

It is to be noted that the external device is not limited to the above exemplified card reader. There can be various external devices and one or more interfaces adapted to the external devices. For example, the processor 102 can receive data, via the interface 104, from a service provider over a network (e.g., Internet), from a mobile device over a wired connection (e.g., USB) or a wireless connection (e.g., infrared, Bluetooth or NFC), from a communication device over a communication link (e.g., RF), or from a storage device (e.g., HDD).

The memory 106 can store data received from the outside, data required for operations of the apparatus 100, and/or data resulting from the operations of the apparatus 100. For example, the memory 106 can store the image data received from the external device via the interface 104, and instructions to instruct the processor 102 to perform the methodologies described herein. The processor 102 can load the instructions, execute the instructions to process the image data, and store processing results into the memory 106.

The apparatus 100 can further comprise an input device 108. The input device 108 can receive inputs to the apparatus from, for example, a user. The input device can be embodied in various forms, such as, keyboard, touch pad, remote controller, or the like. The input device 108 allows the user to customize some rules for the processing of the processor 102. For example, the user can use the input device 108 to define the rule for determining a presenting sequence and/or an animation path, as described in the following.

In addition, the apparatus 100 can further comprise a display 110. The display 110 can display the received image and/or the processed image. For example, the display 110 can comprise a liquid crystal display (LCD), an organic light emitting diode (OLED) display, or the like. In a case where the input device 108 is embodied as a touch pad, the input device can be integrated into the display 110.

According to embodiments of the present disclosure, the apparatus 100 can be embodied in a general computer, a tablet computer, a mobile device, a smart phone, or the like.

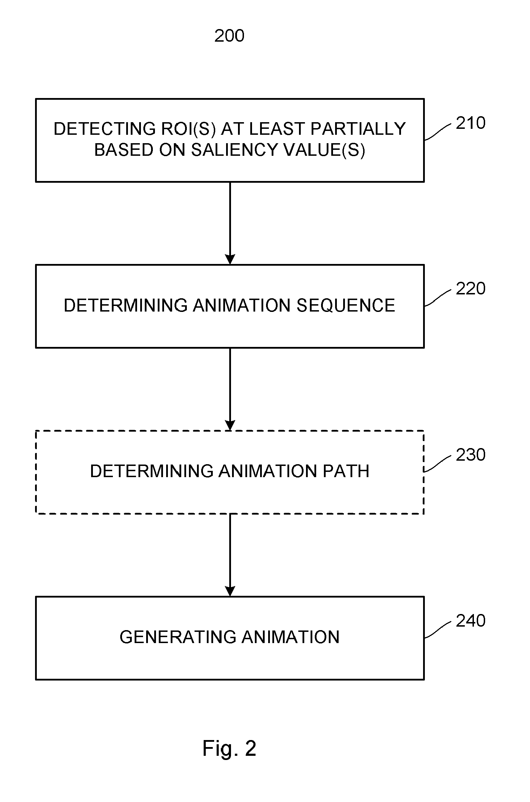

Fig. 2 is a flow chart schematically showing a method according to an embodiment of the present disclosure. The method can be run by, for example, the apparatus, especially, the processor 102, as shown in Fig. 1.

As shown in Fig. 2, the method 200 can comprise an operation 210 of detecting one or more regions of interest (ROIs) in an image. The image is, for example, a still picture taken by a DV or a frame of a video recorded by DVR. In a case of the apparatus 100, the image can be received via the interface 104 and then stored in the memory 106. The ROI(s) each can have associated Metadata, such as size and saliency value.

Here, the term "ROI" can refer to a part or region of the image that is of interest. Generally, the ROI can be more attractive than other parts or regions of the image, so that a viewer will first pay his attention to the ROI when he views the image. For example, such an ROI can be a human face present in the image, or an object in focus in the image.

According to an embodiment of the present disclosure, the ROI(s) can be detected at least partially based on its/their saliency value(s). For example, area(s) of the image with relatively high saliency value(s) (with respect to other areas of the image), especially, with the highest saliency value, can be determined as the ROI(s). In an example, based on the image, a saliency map can be computed and also can be binarized, to achieve the saliency values. According to a further embodiment, face detection can be further performed, to find ROI(s) with human face(s).

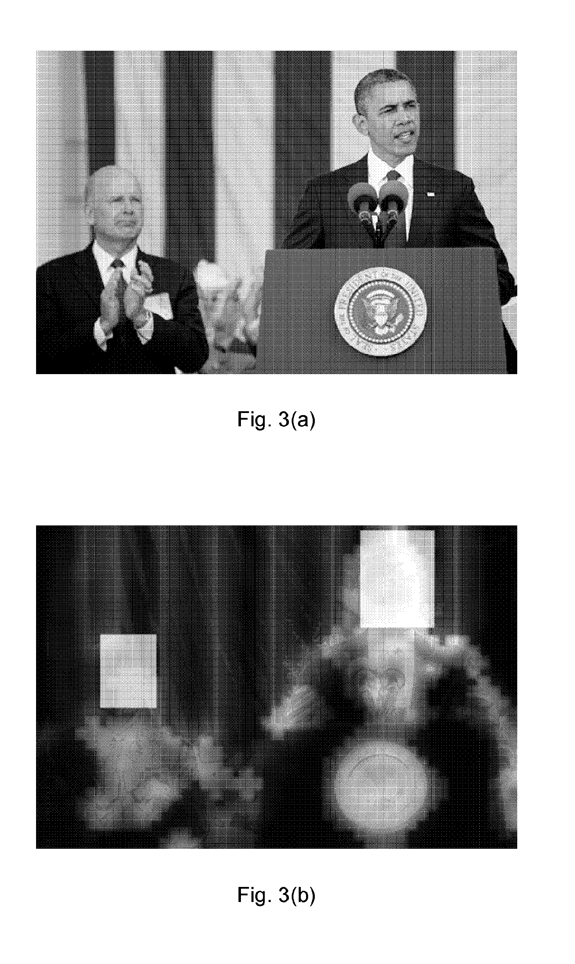

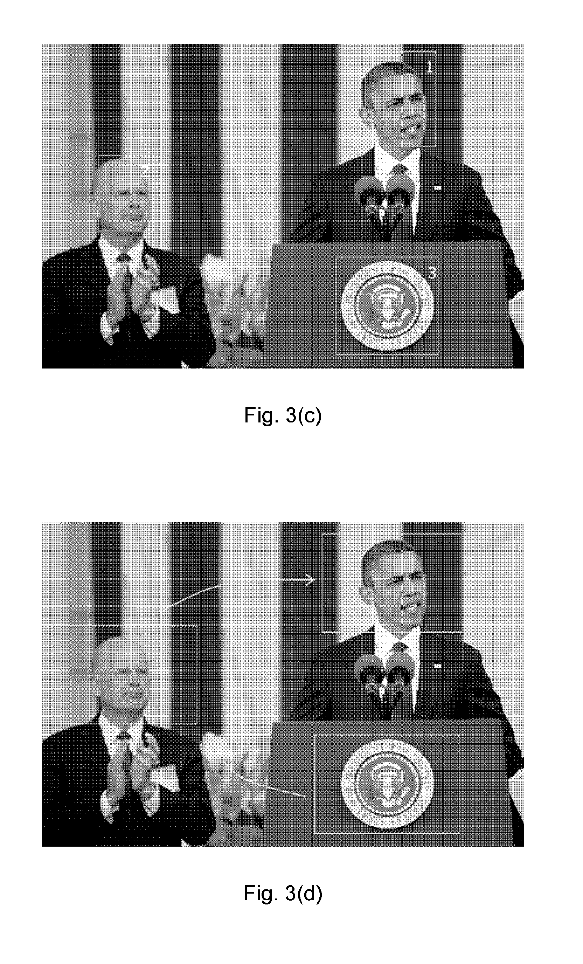

Reference can be made Fig. 3. Fig. 3(a) is an example picture to be processed. Based on saliency value(s), ROI(s) can be found in the picture, as described above. For example, a saliency map can be calculated. Fig. 3(b) shows the saliency map. In this figure, areas with relatively high saliency values are shown as being relatively bright. In this example, three ROIs are found in this picture, as shown in Fig. 3(c).

If no such ROI is found, it means that the image is almost uniform. In this case, there is no area interesting enough to be zoomed in. Thus, it is feasible to display the full image only (without animating some area of this image) or skip this image.

Generally, a screen for presenting or displaying the image or the ROI(s), for example, the display 110 as shown in Fig. 1, has a rectangular shape with an aspect ratio (for example, 4:3 or 16:9). To adapt the ROI(s) to the screen, the ROI(s) can be determined to be rectangular region(s), for example, those with an aspect ratio corresponding to that of the screen. The rectangles (see the rectangles shown in Fig. 3(d)) can enclose the respective areas with the relatively high saliency values (those shown in Fig. 3(b) as being relatively bright). The rectangles each can have a size large enough to entirely enclose the corresponding area. Further, the size can be not too large, for example, just suffice to enclose the corresponding area.

Referring back to Fig. 2, the method can then proceed to an operation 220 of determining a sequence of presenting the one or more ROI(s). Then, the ROI(s) can be presented in this sequence for animation. The sequence can be determined at least partially based on the size(s) of the ROI(s), for example, in an ascending or descending order. For example, the animation path can comprise starting from a largest ROI to a smallest ROI, or starting from a smallest ROI to a largest ROI.

Further, the sequence can be determined at least partially based on location(s) of the respective ROI(s) (in addition to or in lieu of the size criterion). For example, the sequence can comprise going from a current ROI to a next ROI closest to the current ROI, to avoid redundancy.

The sequence can further comprise the image itself, or, "full image" (relative to the ROI(s)). For example, the full image can be arranged prior to or posterior to the ROI(s) in the sequence. Or otherwise, the full image can be considered as an ROI with a size corresponding to the full image, and thus can be arranged together with other ROI(s) as detected above according to a predefined rule, as those described above. As a result, the detected ROI(s) together with the full image can be presented in the determined sequence, for an animation show.

Furthermore, the sequence can be determined at least partially based on "importance" of the respective ROI(s) (in addition to or in lieu of the size/location criterion). Here, the "importance" of each ROI can be evaluated by the saliency value thereof. Non-exhaustive examples of the sequence include: from least important ROI to most important ROI, and then the full image; from most important ROI to least important ROI, and then the full image; the full image, and then from least important ROI to most important ROI; or the full image, and then from most important ROI to least important ROI.

Referring to Fig. 3(d), in this example, the sequence is determined as ROI 3 → ROI 2 →ROI 1 → Full Image.

Turning back to Fig. 2, the method can then proceed to an operation 240 of generating an animation based on the ROI(s) and the sequence. This operation can comprise concatenating the ROI(s) (and also the full image) in accordance with the determined sequence. Then, the generated animation can be outputted for display, such that the ROI(s) (and also the full image) can be presented in the determined sequence. For example, in the example of Fig. 3, ROI 3, ROI 2, ROI 1, and the full image can be displayed in this sequence.

Though the ROIs, when being reproduced, can be zoomed in or enlarged to the full screen, especially if the ROI is a rectangle with the aspect ratio of the screen as described above. However, the present disclosure is not limited thereto. The ROI can be presented in various manners. For example, the ROI can be presented in a highlight manner, by, e.g., taking the ROI out from the image, enlarging it to some extent (but not to the full screen) and then overlaying it on the image, or presenting the ROI while blurring the remaining portions of the image, or the like.

Thus, it resembles that there is a (virtual) camera. The virtual camera can capture an area of the image as a frame. For example, the virtual camera can capture the ROI(s). The captured area then can be presented or displayed. Here, such an area is called "display area," that is, an area of the image to be displayed at one time instant. A sequence of captured frames can be presented as an animation show or video.

To create an animation show or video including frames (i.e., the respective ROIs) in the determined sequence, the virtual camera and thus the display area should be moved from one ROI to another ROI in the sequence. The movement of the virtual cameral or the display area can be made along a path. Here, such a path is called "animation path."

The method 200 can further comprise an operation 230 of determining an animation path.

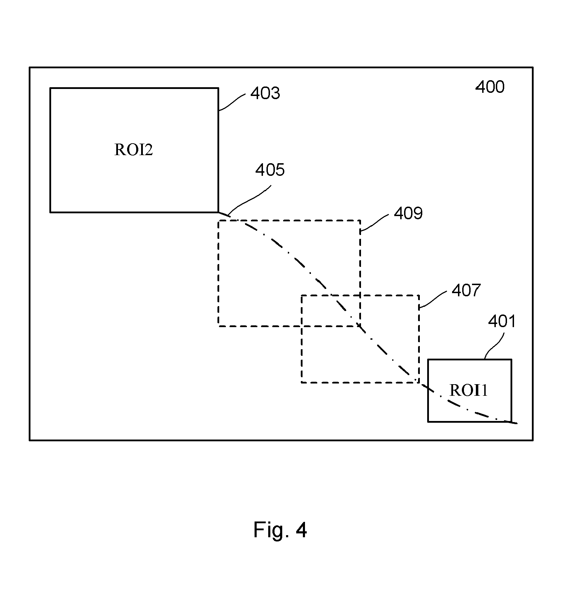

Reference can be made to Fig. 4. Fig. 4 shows an image 400, where two ROIs, ROI1 and ROI2, are shown. There can be more ROIs in the image 400. A trajectory along which the virtual cameral is moved, or the animation path, is shown as 405. The virtual cameral can be moved from ROI1 to ROI2 along the path 405, to capture ROI1 and ROI2, so as to reproduce the captured ROI1 and ROI2 in this sequence.

According to an embodiment of the present disclosure, the virtual camera can capture one or more areas, e.g., 407 and 409, in the path, in addition to ROI1 and ROI2, so that the captured one or more areas can be reproduced between ROI1 and ROI2. Those areas 407 and 409 may or may not overlap with the ROIs, and may or may not overlap with each other. How often the virtual camera performs a capture can depend on a frame frequency of the virtual camera, and how far the captured areas are distant from each other can depend on both the frame frequency and a speed of moving the virtual camera.

Although those areas are not as interesting as the ROI(s) (because they have relatively lower saliency than the ROI(s), for example), the can be helpful to understand what is displayed and relationships between the displayed ROIs. For example, if ROI1 is detected as a hand of a human being and ROI2 is detected as his face, then the path can show his arm or body.

In other words, the display area (e.g., a rectangle) is moved from ROI1 to ROI2 along the path, and a portion of the image enclosed by the display area would be presented or displayed. If the ROI1 is different in size from (for example, smaller than, as shown in Fig. 4) ROI2, the display area should be varied in size to be adapted to the ROIs. More specifically, the display area (or, the rectangle) should have its size varied from the size of ROI1 to the size of ROI2. For example, the size of the display area can be varied according to a linear function or any other continuous function

According to an embodiment, the animation path can be determined at least partially based on saliency. For example, the animation path can be determined to maximize the saliency along the path. Specifically, the path can be selected so that captured areas along the path have the highest saliency.

In a case where the animation is intended for display on a fixed size of screen, for example, the display 110 shown in Fig. 1, the pictures to be displayed (e.g., the ROI(s) and the full image) can be cropped and/or zoomed in/out along the animation path, to be adapted to the screen. A factor for the cropping and/or zooming can be interpolated between two positions in the path, that is, between two ROIs or between an ROI and the full image.

Referring again to Fig. 1, according to further embodiments of the present disclosure, the processor 102 can receive a plurality of images from the external device via the interface 104, and display those images in sequence (for example, in a chronological sequence as determined by the time of tacking the images) for a slide show. Further, the processor 102 can perform processes, such as those described above in conjunction with Figs. 2 to 4, on at least some of the plurality of images, for animation effect.

In determining the presenting sequence, images adjacent to each other in the slide show can have their respective presenting sequence determined differently, such that a first image can have a first presenting sequence which is different from a second presenting sequence of a second image next to the first image. For example, the first presenting sequence can be in a reverse direction to the second presenting sequence.

More specifically, for the first image, the sequence can be arbitrarily selected, for example, from the least important ROI to the most important ROI and then the full image. After the sequence is selected for the i-th image (where i is an integer greater than or equal to 1), the sequence for the i+1 -th image can be selected differently. For example, the sequence for the i-th image can be from ROI(s) to the full image, and then the sequence for the i+1-th image can be from the full image to ROI(s). The ROIs, if multiple, in the i-th image can be arranged in an ascending or descending order, or in an order to minimize the path, and the ROIs, if multiple, in the i+1-th image can be arranged in an ascending or descending order, which can be in the same direction (that is, both are in the ascending order or the descending order) as or in a different direction (that is, one is in the ascending order and the other is in the descending order) from that of the i-th image, or in an order to minimize the path.

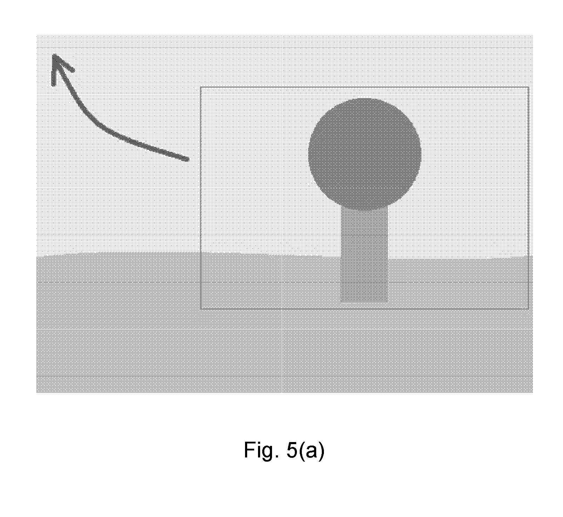

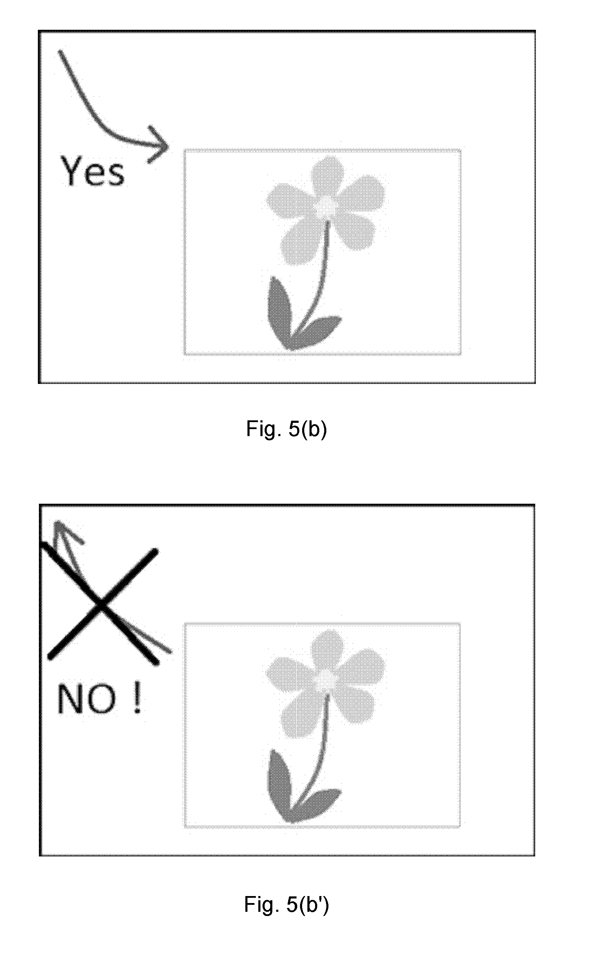

Fig. 5 illustrates such an example. Specifically, Fig. 5(a) shows a presenting sequence selected for the i-th image, that is, from ROI (indicated by the block) to full image, as shown by the arrow in the figure. Then, as shown in Fig. 5(b), a presenting sequence for the i+1-th image can be selected as from full image to ROI, as shown by the arrow in the figure, instead of from ROI to full image shown in Fig. 5(b').

In an example, the sequence of presenting the ROIs can be alternated every image. For example, the sequence for a first image can start from a smallest ROI to a largest ROI (or the full image), the sequence for a second image next to the first image can start from a largest ROI to a smallest ROI, the sequence for a third image next to the second image can be the same as that for the first image, the sequence for a fourth image next to the third image can be the same as that for the second image, and so on. In a case of ending with a relatively small ROI for a first image, then a second image next to the first image can start with a ROI close to the ending ROI of the first image.

Rules for determining the presenting sequence and the animation path can be customized by the user (for example, by the input device 108 shown in Fig. 1), or set in advance in the algorithm.

The technology disclosed herein can have a wide range of applications. For example, it can help people managing their personal video/picture collections.

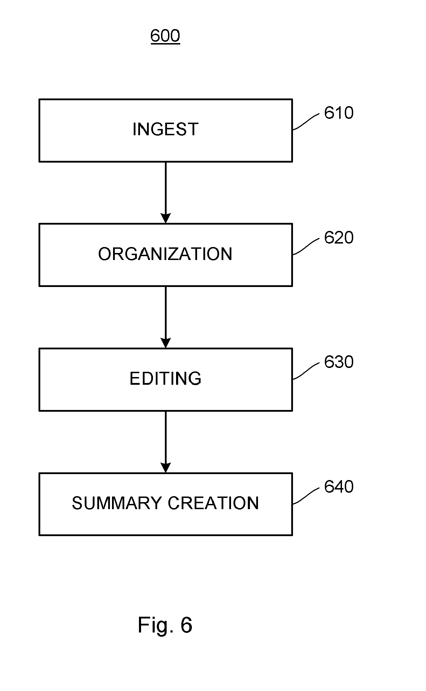

Fig. 6 is a flow chart schematically showing a flow of a possible application.

As shown in Fig. 6, the flow 600 can comprise an operation 610 of ingest. In this operation, contents can be characterized, and then Metadata can be added to the contents. Here, the contents can comprise a series of pictures or video taken by the user, for example, in his journey or his birthday party. He desires to make an electronic album from the pictures or video.

Then, the flow can proceed to an operation 620 of organization. In this operation, the contents can be grouped according to similarity measures, such as, position (GPS), date, color, or the like.

The flow can then proceed to an operation 630 of editing. In this operation, the contents can be enhanced and modified to reach a substantially homogeneous quality. For example, their sizes can be changed to be substantially the same, and their resolutions can be adjusted to be substantially the same.

Then, the flow can proceed to an operation 640 of summary creation. In this operation, interesting contents can be selected, and the selected contents can be concatenated together with pictures that need to be animated in a smart way. For example, the animation can be implemented as described above.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. A method, comprising:
detecting one or more regions of interest (ROIs) in an image at least partially based on saliency values of the one or more ROIs ;
determining a sequence of presenting the one or more ROIs; and
generating an animation based on the ROIs and the sequence,
wherein an animation path, along which a display area is moved between adjacent ROIs in the sequence, is determined to maximize the sum of the saliency values of the one or more ROIs along the path.

2. The method to claim 1, wherein the ROIs and the display area each are rectangular regions.

3. The method according to claim 2, wherein the rectangular regions each have an aspect ratio corresponding to that of a screen for displaying the image.

4. The method according to claim 1 or 3, wherein the display area has its size varied from that of a first ROI to that of a second ROI when it is moved from the first ROI to the second ROI.

5. The method according to claim 3, wherein the size of the display area is varied according to a linear function or any other continuous function.

6. The method according to any of the preceding claims, wherein the one or more ROIs are selected to have relatively high saliency values.

7. The method according to any of the preceding claims, further comprising:
computing a saliency map based on the image, wherein the ROIs are detected based on the saliency map.

8. The method according to any of the preceding claims, wherein the sequence is determined at least partially based on sizes of the respective ROIs.

9. The method according to any of the preceding claims, wherein the sequence is determined at least partially based on the average saliency value of the respective ROIs.

10. The method according to any of the preceding claims, wherein the sequence of ROIs starts and/or ends by the complete image.

11. An apparatus, comprising:
a memory configured to store an image and data required for operation of the apparatus; and
a processor, configured to:
detect one or more regions of interest (ROIs) in the image at least partially based on saliency values of the one or more ROIs;
determine a sequence of presenting the one or more ROIs; and
generate an animation based on the ROIs and the sequence,
wherein an animation path, along which a display area is moved between adjacent ROIs in the sequence, is determined to maximize the sum of the saliency values of the one or more ROIs along the path.

12. The apparatus according to claim 11, further comprising an input device configured to receive an input to define a rule of determining the sequence and/or a rule of determining the animation path.

13. The apparatus according to claim 11, further comprising an interface configured to receive the image from an external device.

14. Computer program comprising program code instructions executable by a processor for implementing the steps of a method according to at least one of claims 1 to 10.

15. Computer program product which is stored on a non-transitory computer readable medium and comprises program code instructions executable by a processor for implementing the steps of a method according to at least one of claims 1 to 10.
